# FASCICULE DE BREVET EUROPEEN

(11) **EP 0 792 422 B1**
(45) Date de publication et mention de la délivrance du brevet: **03.11.1999**
(21) Numéro de dépôt: 95942748.5
(22) Date de dépôt: 15.12.1995
(51) Int. Cl.: F16D 55/40

(54) **DISPOSITIF DE FREINAGE A DISQUES D'UNE ROUE DE VEHICULE**
SCHEIBENBREMSVORRICHTUNG FÜR FAHRZEUGRÄDER
VEHICLE WHEEL DISC BRAKE DEVICE

(30) Priorité: 15.12.1994 FR 9415363
(43) Date de publication de la demande: 03.09.1997
(73) Titulaire: S.A.R.L. Beringer, 42940 Chatelneuf (FR)
(72) Inventeur: BERINGER, Gilbert, (FR)
(74) Mandataire: Thivillier, Patrick
(86) Numéro de dépôt international: FR9501673
(87) Numéro de publication internationale: WO9618829

(56) Documents cités:
- EP-A- 0 398 274
- DE-A- 2 165 817
- GB-A- 2 109 880
- US-A- 2 992 705
- US-A- 5 186 284

## Description

L'invention se rattache au secteur technique des systèmes de freinage, pour motocyclettes.

On sait que pour obtenir un freinage efficace, il est nécessaire de pouvoir dissiper en chaleur, l'énergie cinétique du véhicule considéré. Etant donné que l'énergie cinétique est proportionnelle à la masse totale du véhicule, multipliée par le carré de la vitesse, il en résulte que plus le véhicule est lourd et rapide, plus l'énergie sera importante.

Dans ces conditions, au moment du freinage, si l'énergie doit être dissipée en un temps très court, les disques devront évacuer une chaleur importante, et par conséquent, seront portés à une température élevée. La limite de puissance du freinage dépend donc de la température maximum que peuvent supporter les disques.

Ce problème de pouvoir évacuer très rapidement la chaleur, est d'autant plus important dans le cas de freinages successifs, comme c'est très souvent le cas en motocyclette pratiquée en compétition.

A ce jour, pour permettre de dissiper au maximum la chaleur, en ayant pour objectif d'obtenir un freinage efficace, on a proposé d'augmenter le diamètre des disques. C'est le cas notamment pour les disques en fonte. Cependant, cette augmentation de diamètre a des limites, qui dépendent bien évidemment, du diamètre de la roue mais également du poids. En effet, l'augmentation du poids va diminuer les performances du véhicule.

Ce facteur poids est encore beaucoup plus important et significatif, dans le cas d'une moto où un excédant de poids, notamment au niveau de la roue avant, peut, d'une manière considérable, augmenter l'effet gyroscopique, de sorte que la moto devient de moins en moins maniable dans les enchaînements de courbes.

Il est donc nécessaire d'avoir un effet gyroscopique le plus faible possible, ce qui est incompatible, si l'on augmente le diamètre et par conséquent, le poids des disques du dispositif de freinage. Il est rappelé que plus on augmente le diamètre du disque, plus l'épaisseur de ce dernier doit également être augmenté.

On connaît également des dispositifs de freinage équipés de disques en carbone. L'avantage lié au carbone réside dans le fait que c'est un matériau qui peut atteindre des températures très élevées et qui est très léger. Par contre, l'inconvénient d'un disque en carbone réside dans le fait que ce dernier doit impérativement atteindre une certaine température, en déca de laquelle le freinage est totalement inefficace.

Enfin, les disques en carbone sont d'un coût très élevé et ont une durée de vie très courte.

On a également proposé des systèmes de freinage comprenant plusieurs disques placés en parallèle, en étant empilés les uns sur les autres, comme il ressort de l'enseignement du brevet EP 0398274. Toutefois, les dispositions décrites dans ce brevet ne sont pas applicables pour le freinage d'une motocyclette, étant donné que les disques sont emprisonnés dans un carter, de sorte qu'il y a une accumulation importante de la chaleur au moment du freinage. Cette solution peut éventuellement être appliquée pour réaliser un freinage puissant pendant un temps relativement long mais est totalement inadaptée pour réaliser des freinages successifs de fortes puissances où il est indispensable, entre chaque freinage, de pouvoir dissiper la chaleur pour ne pas diminuer l'efficacité du freinage.

Par le brevet DE-A-2165817, on connaît un système de freinage mettant en oeuvre deux disques parallèles susceptibles d'être soumis à un effort de serrage, sous l'action de plaquettes assujetties à des pistons, l'ensemble étant porté par un étrier. L'un des disques est solidaire d'un moyeu, tandis que l'autre disque est monté avec capacité de déplacement en translation sur ce moyeu, en y étant guidé par un système de cannelures. Ce guidage en translation du disque mobile par rapport au disque fixe, nécessite un encombrement important, de sorte qu'un tel système de freinage est totalement inapplicable dans le cas d'une motocyclette.

L'invention s'est fixée pour but de remédier à ces inconvénients, de manière simple, sûre, efficace et rationnelle.

La puissance donnée au freinage par un disque étant fonction de sa surface en contact avec l'air, il apparaît que si l'on veut conserver la même surface de dissipation pour évacuer les calories dans l'air, il est nécessaire de conserver la même surface de contact du disque avec l'air.

A partir de cette constatation, le problème que se propose de résoudre l'invention, est de réaliser un dispositif de freinage mettant en oeuvre des disques en acier ou en fonte notamment, permettant de dissiper, en chaleur, l'énergie cinétique d'une manière efficace, en diminuant le poids, et surtout en diminuant l'effet gyroscopique dans le cas d'une application du dispositif à un véhicule du type moto.

Pour résoudre un tel problème, il a été conçu et mis au point un dispositif de freinage à disques d'une roue de motocyclette comprenant, pour au moins un côté d'une roue, un moyeu équipé d'au moins deux disques parallèles montés chacun entre deux plaquettes ou patins contenus dans un étrier commun, lesdites plaquettes ou patins étant assujettis à des agencements de l'étrier pour exercer un effort de serrage sur chacun des disques.

Selon l'invention, compte tenu du problème posé d'avoir un encombrement réduit et de pouvoir dissiper très rapidement la chaleur en cas de freinages successifs et puissants, les disques sont montés avec capacité de déplacement sur des douilles disposées périphériquement entre deux couronnes que présente le moyeu, le plan de rotation de chaque disque étant défini par les deux plaquettes ou patins en regard qui assurent un guidage constant, l'étrier commun, sous forme d'un secteur limité, enserrant une partie seulement de l'ensemble des disques.

Pour résoudre le problème posé d'obtenir un dispositif compact, l'étrier comprend deux flasques latéraux montés en combinaison avec une partie centrale présentant au moins une entretoise de séparation et d'appui disposée entre deux disques.

Dans une première forme de réalisation, l'étrier peut être monté fixe sur une partie déterminée du véhicule considéré. Dans ce cas, chacun des flasques de l'étrier présente au moins un piston, le ou les pistons des flasques en regard étant coaxiaux et opposés en étant aptes à agir sur les plaquettes de chaque disque, dont le déplacement, à l'encontre de la partie centrale fixe dudit étrier, permet de compenser l'usure desdites plaquettes.

Dans une autre forme de réalisation, l'étrier peut être monté d'une manière flottante. Dans ce cas, l'un des flasques de l'étrier présente au moins un piston, l'autre flasque étant directement en appui sur la plaquette correspondante du disque considéré, le ou lesdits pistons étant aptes à agir sur les plaquettes de chaque disque, dont le déplacement, à l'encontre de la partie centrale fixe dudit étrier, permet de compenser l'usure desdites plaquettes.

Il apparaît donc, quel que soit le montage de l'étrier, que les disques sont utilisés pour rattraper l'usure des plaquettes, étant donné qu'au fur et à mesure de l'usure desdites plaquettes, les disques vont se déplacer sur les douilles portées par le moyeu. L'étrier qui délimite un secteur limité pour enserrer seulement une partie réduite de la circonférence des disques, évite toute accumulation de la chaleur, le plan de rotation de chaque disque étant défini par les deux plaquettes ou patins, qui assurent un guidage constant de chacun des disques.

D'une manière générale, lorsque le dispositif met en oeuvre, dans les conditions indiquées, n disques, n étant supérieur ou égal à 2, l'étrier présente n-1 parties centrales supportant les plaquettes, lesdites parties étant montées avec capacité de déplacement guidé de manière à répartir l'effort de freinage sur les n disques.

L'invention est exposée, ci-après plus en détail à l'aide des dessins annexés, dans lesquels :

La figure 1 est une vue en coupe transversale d'une forme de réalisation du dispositif, dans le cas d'une application à une moto.

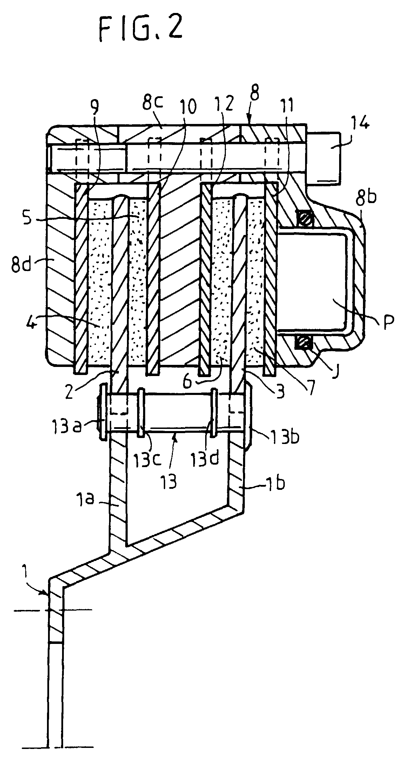

La figure 2 est une vue en coupe longitudinale d'une autre forme de réalisation du dispositif dans le cas d'un étrier flottant.

La figure 3 est une vue de côté correspondant à la figure 2.

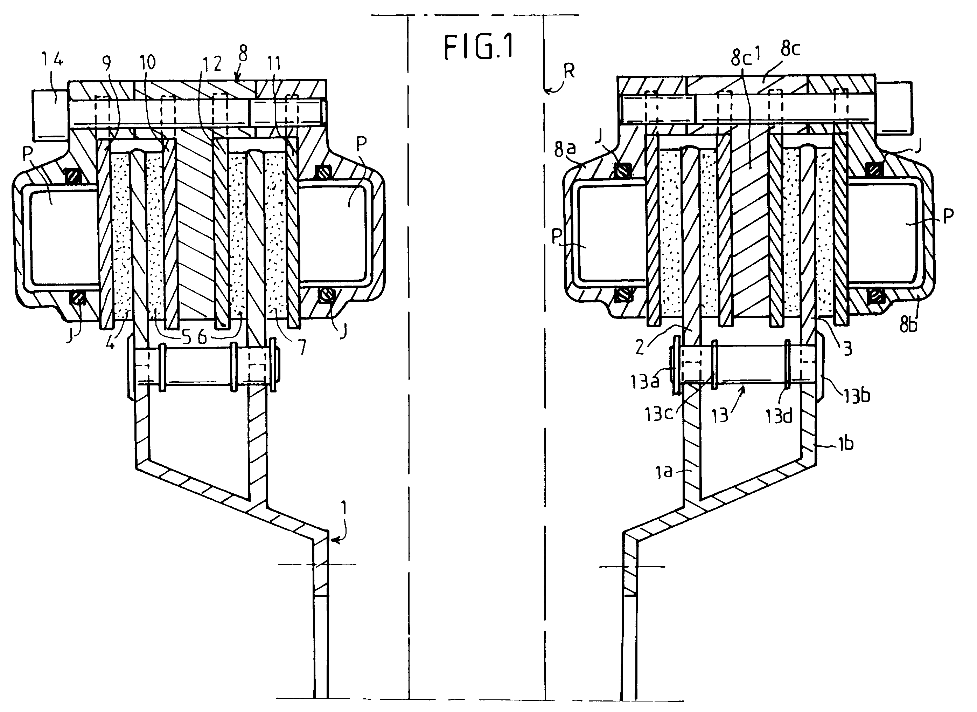

Comme indiqué, le dispositif de freinage s'applique à tout type de moto. La figure 1 montre une telle application du dispositif, qui est rigoureusement symétrique pour chacun des flasques de la roue (R) de la moto.

Comme indiqué, le dispositif de freinage selon l'invention, est du type à disques.

Selon l'invention, le dispositif comprend un moyeu (1) fixé en combinaison avec des agencements de la roue et de la moto, par tout moyen connu et approprié. Le montage de l'ensemble du dispositif de freinage par rapport à la moto considérée, ne fait pas partie de l'objet spécifique de l'invention, et peut présenter différentes formes de réalisations à la portée de tout homme du métier en étant susceptible de présenter différentes formes de réalisation, en fonction de l'application envisagée.

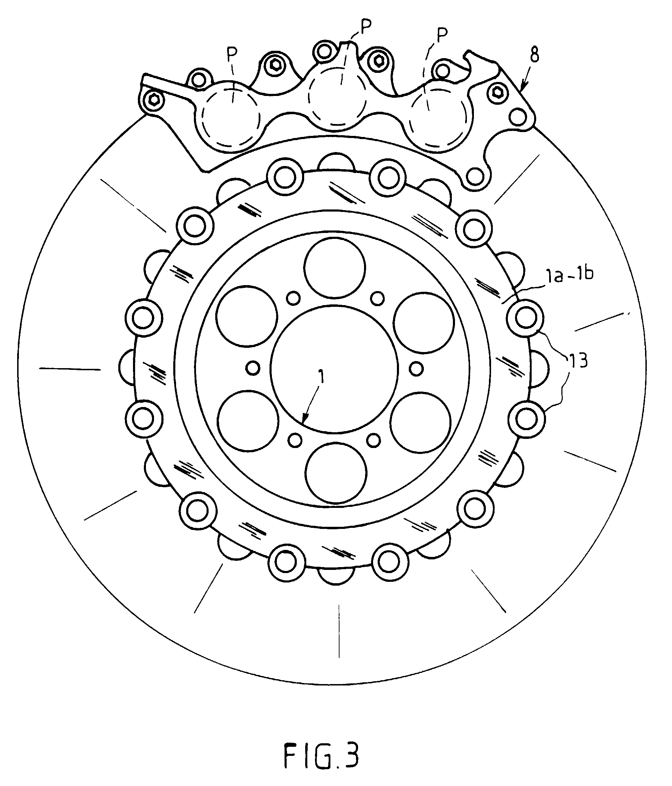

Le moyeu est agencé pour recevoir au moins deux disques parallèles (2) (3) montés chacun entre deux plaquettes (4) (5) et (6) (7). L'ensemble des disques et des plaquettes est contenu dans un étrier commun (8). Comme le montre la figure 3, l'étrier a une forme générale en secteur, pour enserrer une partie seulement de la circonférence des disques (2) et (3).

L'étrier (8) comprend deux flasques latéraux (8a) et (8b) montés en combinaison avec un corps central (8c). Le corps (8c) présente une branche médiane (8c1) constituant une entretoise de séparation et d'appui, en étant disposée entre les deux disques (2) (3). Les plaquettes de freinage (4) (5) et (6) (7) sont fixées respectivement sur des éléments (9) (10) (11) (12) rendus solidaires d'une manière démontable d'agencements que présente l'étrier.

Plus particulièrement, les éléments supports (9) (11) des plaquettes (4) (7) coopèrent avec des agencements, non représentés, des flasques (8a) (8b), tandis que les éléments support (10) (12) coopèrent avec des agencements, non représentés, de l'entretoise médiane d'appui (8c1). La fixation des plaquettes de freinage sur les parties correspondantes de l'étrier, dans les conditions indiquées, n'est pas décrite en détail car parfaitement connue pour un homme du métier.

L'étrier (8), notamment les flasques (8a) et/ou (8b) présentent des moyens de commande aptes à soumettre les plaquettes (4) (5) et (6) (7) à un effort de serrage sur chacun des disques considéré (2) (3). Ces moyens peuvent avantageusement être constitués par des pistons (P), montés en combinaison avec des joints d'étanchéité (J).

Chaque flasque (8a) et/ou (8b) peut présenter un piston mais, d'une manière préférée, présente plusieurs pistons. Les parties correspondantes de l'étrier sont agencées en conséquence, pour permettre l'arrivée d'un fluide hydraulique sous pression, pour la commande des pistons (P).

A partir de cette conception de base, l'ensemble de l'étrier (8) peut être monté par rapport à la partie correspondante du véhicule, soit d'une manière fixe, soit d'une manière flottante. Dans le cas d'un étrier fixe, chacun des flasques (8a) (8b) présente un ou plusieurs pistons (P). Le ou les pistons des deux flasques en regard sont coaxiaux et opposés. Par contre, dans le cas d'un étier mobile, seul par exemple le flasque (8b) présente un ou des pistons, le flasque (8a) présentant seulement une partie d'appui et de réaction à l'effort de pression exercé par le ou les pistons du flasque opposé.

De manière importante, les disques (2) et (3) sont montés flottants sur des couronnes (1a) et (1b) que présente le moyeu (1). Ce montage flottant peut s'effectuer, par exemple, au moyen d'une pluralité de douilles (13) portées par la périphérie des couronnes circulaires (1a) et (1b). Une même douille est portée par les deux couronnes parallèles (1a) et (1b). Dans ces conditions, l'ensemble des douilles (13) reçoit, avec capacité de coulissement guidé, les disques (2) et (3) qui constituent la piste de freinage en tant que telle, avec la possibilité de se rapprocher l'un par rapport à l'autre. Chaque douille (13) présente, à ses extrémités, des collerettes d'appui et de butée (13a) (13b) et dans sa partie médiane, des butées intermédiaires (13c) (13d).

Il en résulte que sous l'effort de pression exercé par le ou les pistons (P) sur les plaquettes correspondantes, les disques (2) et (3) ont tendance à se déplacer sur les douilles (13) en direction de l'entretoise centrale d'appui (8c1), ce qui a pour effet de compenser automatiquement, l'usure des plaquettes. Au fur et à mesure de l'usure des plaquettes, les disques se déplacent sur les douilles (13), permettant de conserver un freinage parfaitement équilibré. Par ailleurs, il apparaît que les disques sont constamment guidés par les plaquettes de l'étrier qui définissent, en combinaison, le plan de rotation de chaque disque.

Bien évidemment, les pistes de freinage (2) (3) peuvent être obtenues par usinage ou emboutissage et peuvent être réalisées en fonte grise lamellaire, sans pour cela exclure d'autres matériaux.

Les flasques (8a) (8b) et le corps central (8c) de l'étrier, sont assemblés par tout moyen connu et approprié, notamment au moyen de vis (14).

Avantageusement, comme illustré figure 3, l'étrier (8) reçoit trois séries de pistons (P).

A noter que le dispositif de freinage est illustré avec deux disques montés dans un même étrier. On n'exclut pas de réaliser le dispositif avec un nombre de disques supérieur montés en parallèle. Dans ce cas, de manière générale, si le dispositif présente n disques, n étant supérieur ou égal à 2, l'étrier (8) présente n-1 parties centrales (8c) montées avec capacité de déplacement guidé de manière à répartir l'effort de freinage sur les n disques.

Les avantages ressortent bien de la description, en particulier on souligne et on rappelle :
- le fait de multiplier le nombre de disques pour un même étrier, permet de diminuer leur diamètre et leur épaisseur, engendrant une diminution du poids, et en diminuant, très sensiblement par le nombre de disques, l'effet gyroscopique dans le cas d'une application à une moto, ce qui s'avère particulièrement important,
- l'efficacité de freinage obtenue, suite à la dissipation efficace de la chaleur, qui dépend de la surface de contact avec l'air, permettant ainsi d'obtenir des freinages successifs et puissants,
- l'application du dispositif à tous types de motocyclettes,
- l'utilisation des pistes des disques d'un même dispositif, pour compenser automatiquement l'usure des plaquettes.

## Revendications

1. Dispositif de freinage à disques d'une roue de motocyclette comprenant, pour au moins un côté d'une roue, un moyeu (1) équipé d'au moins deux disques parallèles (2, 3) montés chacun entre deux plaquettes ou patins (4, 5, 6, 7) contenus dans un étrier commun (8), lesdits plaquettes ou patins (4, 5, 6, 7) étant assujettis à des agencements de l'étrier (8) pour exercer un effort de serrage sur chacun des disques (2, 3), caractérisé en ce que les disques (2, 3) sont montés avec capacité de déplacement sur des douilles (13) disposées périphériquement entre deux couronnes (1a, 1b) que présente le moyeu (1), le plan de rotation de chaque disque étant défini par les deux plaquettes ou patins en regard (4, 5, 6, 7) qui assurent un guidage constant, l'étrier commun (8), sous forme d'un secteur limité, enserrant une partie seulement de l'ensemble des disques (2, 3).

2. Dispositif selon la revendication 1, caractérisé en ce que l'étrier (8) comprend deux flasques latéraux (8a) (8b) montés en combinaison avec une partie centrale (8c) présentant au moins une entretoise de séparation et d'appui (8cl) disposée entre deux disques (2) (3).

3. Dispositif selon la revendication 1, caractérisé en ce que les douilles (13) sont équipées chacune de moyens (13a) (13b) (13c) (13d) aptes à limiter le déplacement en translation des disques (2) (3).

4. Dispositif selon la revendication 1, caractérisé en ce que les plaquettes ou patins (4) (5) (6) (7) sont fixés en combinaison avec des éléments (9) (10) (11) (12) que présentent les flasques (8a) (8b) de l'étrier et l'entretoise de la partie centrale qui est fixe (8c).

5. Dispositif selon la revendication 1, caractérisé en ce que l'étrier (8) est fixe.

6. Dispositif selon la revendication 5, caractérisé en ce que chacun des flasques (8a) (8b) de l'étrier (8) présente au moins un piston (P), le ou les pistons des flasques en regard étant coaxiaux et opposés en étant aptes à agir sur les plaquettes de chaque disque, dont le déplacement, à l'encontre de la partie centrale fixe dudit étrier, permet de compenser l'usure desdites plaquettes.

7. Dispositif selon la revendication 1, caractérisé en ce que l'étrier (8) est flottant.

8. Dispositif selon la revendication 7, caractérisé en ce que l'un des flasques (8b) de l'étrier (8) présente au moins un piston (P), l'autre flasque étant directement en appui sur la plaquette correspondante du disque considéré (2), le ou lesdits pistons étant aptes à agir sur les plaquettes de chaque disque, dont le déplacement, à l'encontre de la partie centrale fixe dudit étrier, permet de compenser l'usure desdites plaquettes.

9. Dispositif selon la revendication 1, caractérisé en ce que pour n disques, n étant supérieur ou égal à 2, l'étrier présente n-1 parties centrales (8c) supportant les plaquettes, lesdites parties étant montées avec capacité de déplacement guidé de manière à répartir l'effort de freinage sur les n disques.

## Claims

1. Disc braking device for a motorcycle wheel comprising, for at least one side of a wheel, a hub (1) fitted with at least two parallel discs (2, 3), each fitted between two pads (4, 5, 6, 7) contained in a common calliper (8), said pads (4, 5, 6, 7) being secured to features of the calliper (8) in order to exert a clamping force on each of the discs (2, 3), characterised in that the discs (2, 3) are movably installed on bushes (13) arranged peripherally between two collars (1a, 1b) of the hub (1), the plane of rotation of each disc being defined by the two opposite pads (4, 5, 6, 7) which ensure constant guiding, the common calliper (8) enclosing only part of the disc assembly (2, 3) in the form of a limited sector.

2. Device as claimed in claim 1, characterised in that calliper (8) comprises two lateral end shields (8a) (8b) mounted in combination with a central part (8c) having at least one separating and support spacer (8cl) placed between two discs (2) (3).

3. Device as claimed in claim 1, characterised in that bushes (13) are each equipped with means (13a) (13b) (13c) (13d) capable of restricting translational movement of discs (2) (3).

4. Device as claimed in claim 1, characterised in that pads (4) (5) (6) (7) are fitted in combination with elements (9) (10) (11) (12) of end shields (8a) (8b) of the calliper and the spacer of the central part which is fixed (8c).

5. Device as claimed in claim 1, characterised in that calliper (8) is fixed.

6. Device as claimed in claim 5, characterised in that each of the end shields (8a) (8b) of calliper (8) has at least one plunger (P), the plunger(s) of opposite-facing end shields being axially aligned and opposed and capable of acting on the pads of each disc, movement of which in opposition to the fixed central part of said calliper makes it possible to compensate for wear of said pads.

7. Device as claimed in claim 1, characterised in that calliper (8) is floating.

8. Device as claimed in claim 7, characterised in that one of the end shields (8b) of calliper (8) has at least one plunger (P), the other end shield directly resting against the corresponding pad of the disc in question (2), the said plunger(s) being capable of acting on the pads of each disc, movement of which in opposition to the fixed central part of said calliper makes it possible to compensate for wear of said pads.

9. Device as claimed in claim 1, characterised in that, for n discs where n is equal to or greater than 2, the calliper has n-1 central parts (8c) supporting the pads, said parts being mounted with the ability to move in a guided manner in order to distribute the braking force over the n discs.

## Patentansprüche

1. Scheibenbremsvorrichtung eines Motorrads mit - zumindest auf einer Seite eines Rades - einer Nabe (1) mit mindestens zwei parallelen Scheiben (2, 3), die jeweils zwischen zwei Klötzen oder Schuhen (4, 5, 6, 7) in einem gemeinsamen Bügel (8) angebracht sind, wobei die Klötze oder Schuhe (4, 5, 6, 7) von Vorkehrungen des Bügels (8) abhängig sind, um auf jede der Scheiben (2, 3) eine Spannkraft auszuüben, dadurch gekennzeichnet, daß die Scheiben (2, 3) beweglich auf Hülsen (13) montiert sind, die umfangsseitig zwischen zwei Kränzen (1a und 1b) der Nabe (1) angeordnet sind, wobei die Drehebene jeder Scheibe durch die beiden gegenüberliegenden Klötze oder Schuhe (4, 5, 6, 7) definiert wird, die für eine gleichbleibende Führung sorgen, wobei der gemeinsame Bügel (8) in Form eines begrenzten Sektors nur einen Teil der gesamten Scheiben (2, 3) umschließt.

2. Vorrichtung nach Anspruch 1, dadurch gekennzeichnet, daß der Bügel (8) zwei Seitenwände (8a) (8b) umfaßt, die in Verbindung mit einem Mittelteil (8c) angebracht sind, das mindestens ein zwischen zwei Scheiben (2) (3) angeordnetes Trenn- und Auflagestück (8cl) aufweist.

3. Vorrichtung nach Anspruch 1, dadurch gekennzeichnet, daß die Hülsen (13) jeweils mit Einrichtungen (13a) (13b) (13c) (13d) versehen sind, die geeignet sind, die Translationsbewegung der Scheiben (2) (3) zu begrenzen.

4. Vorrichtung nach Anspruch 1, dadurch gekennzeichnet, daß die Klötze oder Schuhe (4) (5) (6) (7) in Verbindung mit Elementen (9) (10) (11) (12) befestigt sind, die die Seitenwände (8a) (8b) des Bügels und das Distanzstück des ortsfesten Mittelteils (8c) aufweisen.

5. Vorrichtung nach Anspruch 1, dadurch gekennzeichnet, daß der Bügel (8) ortsfest ist.

6. Vorrichtung nach Anspruch 5, dadurch gekennzeichnet, daß jede Seitenwand (8a) (8b) des Bügels (8) mindestens einen Kolben (P) aufweist, wobei der bzw. die Kolben der einander gegenüberliegenden Seitenwände koaxial und entgegengesetzt verlaufen und geeignet sind, auf die Klötze jeder Scheibe einzuwirken, deren Bewegung gegenüber dem ortsfesten mittleren Teil des Bügels die Abnutzung der Klötze kompensiert.

7. Vorrichtung nach Anspruch 1, dadurch gekennzeichnet, daß der Bügel (8) flottierend gelagert ist.

8. Vorrichtung nach Anspruch 7, dadurch gekennzeichnet, daß eine der Seitenwände (8b) des Bügels (8) mindestens einen Kolben (P) aufweist und die andere Seitenwand unmittelbar auf dem entsprechenden Klotz der betreffenden Scheibe (2) aufliegt, wobei der bzw. die Kolben geeignet sind, auf die Klötze jeder Scheibe einzuwirken, deren Bewegung gegenüber dem ortsfesten mittleren Teil des Bügels die Abnutzung der Klötze kompensiert.

9. Vorrichtung nach Anspruch 1, dadurch gekennzeichnet, daß bei n Scheiben (wobei n größer oder gleich 2 ist) der Bügel n-1 die Klötze tragende Mittelteile (8c) aufweist, wobei diese Teile geführt beweglich so angebracht sind, daß die Bremskraft auf die n Scheiben verteilt wird.
